# EUROPEAN PATENT APPLICATION

(11) **EP 4 645 875 A1**
(43) Date of publication of application: **05.11.2025**
(21) Application number: 23914831.5
(22) Date of filing: 02.01.2023
(51) Int. Cl.: H04N 21/431, H04N 21/485, H04N 21/436, H04N 21/4363

(54) **DISPLAY DEVICE AND IMAGE QUALITY CONTROL METHOD THEREOF**

(71) Applicant: LG Electronics Inc., Yeongdeungpo-gu Seoul 07336 (KR)
(72) Inventor: OH, Seungkeun, Seoul 06772 (KR)
(74) Representative: Schott, Jakob Valentin
(86) International application number: PCT/KR2023/000007
(87) International publication number: WO 2024/147365

(57) **Abstract**

The present disclosure relates to making image quality control efficient when a multi-view function is provided. This display device may: display a multi-view screen comprising a plurality of split screens; determine an image quality control path of each of a plurality of input sources respectively corresponding to the plurality of split screens on the basis of a priority of each of the input sources; carry out, according to the determined image quality control path, image quality processing on each of the plurality of input images provided through each of the input sources; and display the plurality of processed input images on the plurality of split screens, respectively.

## Description

### TECHNICAL FIELD

The present disclosure relates a display device that controls an image quality when a multi-view function is provided.

### BACKGROUND ART

Digital TV services using wired or wireless communication network are becoming popular. Such a digital TV service may provide various services that may not be provided by the existing analog broadcasting service.

For example, in the case of IPTV (Internet Protocol Television) or smart TV service, which is a , digital TV service type, it may provide bidirectionality in which a user may actively select a type of viewing program and a viewing time. IPTV and smart TV services may provide various additional services such as Internet search, home shopping, online games, etc. on the basis of the bidirectionality.

A multi-view function is a function of splitting the entire display screen into a plurality of screens and playing an image on each split screen.

In the related art, when providing a multi-view function, an image quality control was performed by being divided into a main path and a sub path, but there was a problem that the main path and the sub path are determined according to an order of input sources.

In this case, unlike the user's intention, the input source input through the sub path has a problem in that the image quality is deteriorated compared to the input source input through the main path.

In addition, when using the multi-view function, there is also the problem that it is not easy to switch between a main screen and a sub screen and change in size.

### DISCLOSURE OF THE INVENTION

### TECHNICAL PROBLEM

An object of the present disclosure is to provide an optical image quality when providing a multi-view function by distinguishing a main path and a sub path according to types of input sources.

An object of the present disclosure is to prevent unnecessary power consumption by dividing an image quality control path of an image provided from an input source into a main path and a sub path according to a size of a screen when providing a multi-view function.

An object of the present disclosure is to facilitate switching between screens and change in size when providing a multi-view function.

### TECHNICAL SOLUTION

A display device according to an embodiment of the present disclosure may include: a display configured to display a multi-view screen comprising a plurality of split screens; and a controller configured to: determine an image quality control path of each of input sources on the basis of a priority of the plurality of input sources that respectively correspond to the plurality of split screens; process an image quality of each of a plurality of input images that are respectively provided through the input sources according to the determined image quality control path; and display the plurality of input images, of which the qualities are processed, on the plurality of split screens, respectively.

A method for controlling an image quality of a display device according to an embodiment of the present disclosure may include: displaying a multi-view screen comprising a plurality of split screens; determining an image quality control path of each of a plurality of input sources on the basis of a priority of each of the plurality of input sources respectively corresponding to the plurality of split screens; processing an image quality of each of a plurality of input images respectively provided through the plurality of input sources according to the determined image quality control path; and displaying the plurality of input images, of which the qualities are processed, on the plurality of split screen, respectively.

### ADVANTAGEOUS EFFECTS

According to the various embodiments of the present disclosure, when providing the multi-view function, the image quality control of the input source may be selectively performed according to the types of input sources. Therefore, the selective image quality control may be performed on the images, in which the control of all the image quality elements is unnecessary, to prevent the power consumption.

According to the embodiment of the present disclosure, when providing the multi-view function by simultaneously considering the correlation of the screen size and the priority of each of the input sources, the image having the optical image may be output through each of the split screens.

In addition, when using the multi-view function having the two or more screens, the user experience may be improved by allowing the user to freely change the position and size of each of the main screen and the sub-screens.

### BRIEF DESCRIPTION OF THE DRAWINGS

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing a remote control device according to an embodiment of the present disclosure.
Fig. 5 is a view for explaining a method for controlling an image quality of a display device according to an embodiment of the present disclosure.
Figs. 6a to 6f are views illustrating various types of multi-views according to an embodiment of the present disclosure.
Fig. 7 is a view for explaining an example of a multi-view setting screen according to an embodiment of the present disclosure.
Fig. 8 is a view for explaining a first reference table according to an embodiment of the present disclosure.
Figs. 9a and 9b are views for explaining an image quality control path according to an embodiment of the present disclosure.
Fig. 10 is a view for explaining a second reference table according to an embodiment of the present disclosure.
Figs. 11 to 14 are views for explaining various examples of changing a position of an input image displayed on a split screen when a multi-view function operates.
Fig. 15 is a view for explaining an example of changing the image quality control path according to a change in size of the split screen on a multi-view screen.
Figs. 16a and 16b are views illustrating a process of outputting an input source on a screen of a display via the image quality control path when providing the multi-view function.
Figs. 17a to 17d are views for explaining the image control path through which the input source passes according to a change in position of the input source when providing the multi-view function.

### MODE FOR CARRYING OUT THE INVENTION

Hereinafter, embodiments relating to the present disclosure will be described in detail with reference to the accompanying drawings. The suffixes "module" and "part" for components used in the description below are assigned or mixed in consideration of easiness in writing the specification and do not have distinctive meanings or roles by themselves.

A display device according to an embodiment of the present invention, for example, as an artificial display device that adds a computer supporting function to a broadcast receiving function, may have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS may be used.

Accordingly, since various applications are freely added or deleted on a general purpose OS kernel, a display device described in the present invention, for example, may perform various user-friendly functions. The display device, in more detail, may be a network TV, Hybrid Broadcast Broadband TV (HBBTV), smart TV, light-emitting diode (LED) TV, organic light-emitting diode (OLED) TV, and so on and in some cases, may be applied to a smartphone.

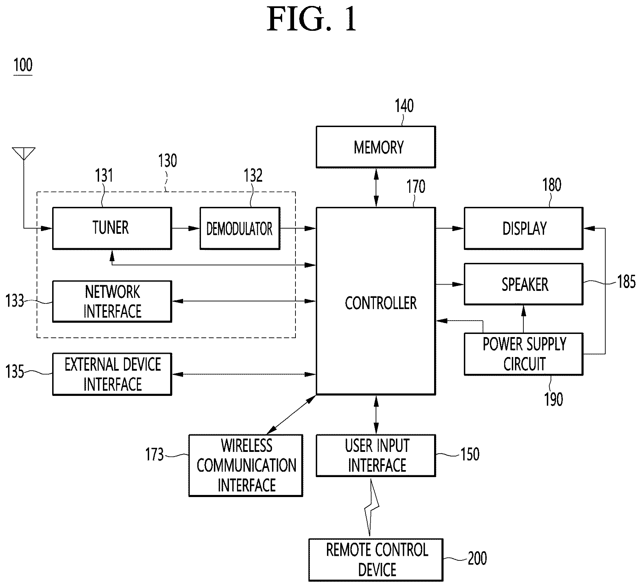

Fig. 1 is a block diagram illustrating a configuration of a display device according to an embodiment of the present disclosure.

Referring to Fig. 1, a display device 100 may include a broadcast reception module 130, an external device interface unit 135, a storage unit 140, a user input unit 150, a controller 170, a wireless communication interface unit 173, a display 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into video signals, audio signals, and broadcast program-related data signals, and may restore the divided video signals, audio signals, and data signals into an output available form.

The external device interface unit 135 may receive an application or an application list in an adjacent external device and deliver the application or the application list to the controller 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The storage unit 140 may store signal-processed image, voice, or data signals stored by a program in order for each signal processing and control in the controller 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the controller 170, or may transmit signals from the controller 170 to a user. For example, the user input unit 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input unit 150 may transmit, to the controller 170, control signals input from local keys (not shown) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface unit 135.

Voice signals processed by the controller 170 may be output to the audio output unit 185. In addition, voice signals processed by the controller 170 may be input to the external output device through the external device interface unit 135.

Additionally, the controller 170 may control overall operations of the display device 100.

In addition, the controller 170 may control the display device 100 by a user command or an internal program input through the user input unit 150, and may access the network to download a desired application or application list into the display device 100.

The controller 170 may output channel information selected by a user together with the processed image or voice signals through the display 180 or the audio output unit 185.

In addition, the controller 170 may output image signals or voice signals of an external device such as a camera or a camcorder, which are input through the external device interface unit 135, through the display 180 or the audio output unit 185, according to an external device image playback command received through the user input unit 150.

Moreover, the controller 170 may control the display 180 to display images, and may control the display 180 to display broadcast images input through the tuner 131, external input images input through the external device interface unit 135, images input through the network interface unit, or images stored in the storage unit 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. Moreover, the wireless communication unit 173 may perform wired or wireless communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100.

Furthermore, if the sensed wearable device is a device authenticated to communicate with the display device 100, the control unit 170 may transmit at least a portion of data processed in the display device 100 to the wearable device through the wireless communication unit 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display 180 and the audio output unit 185.

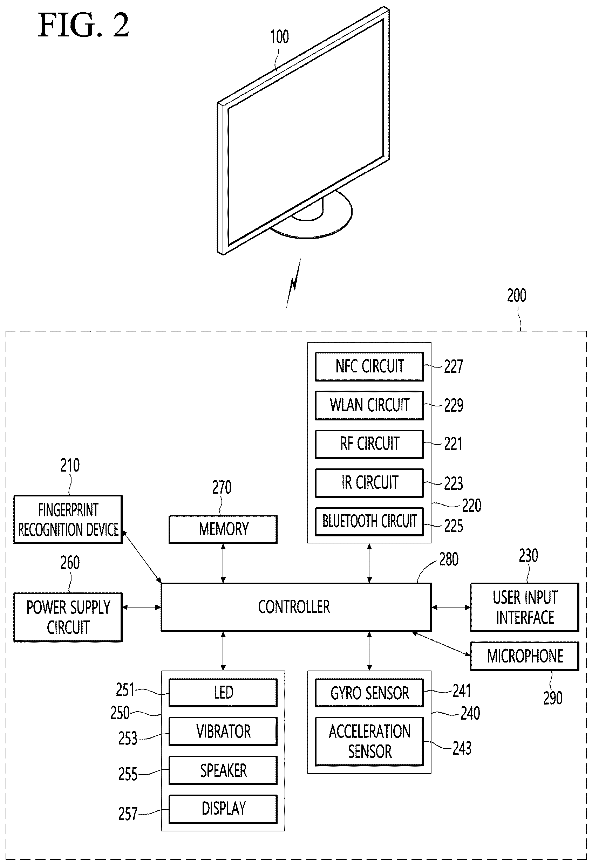

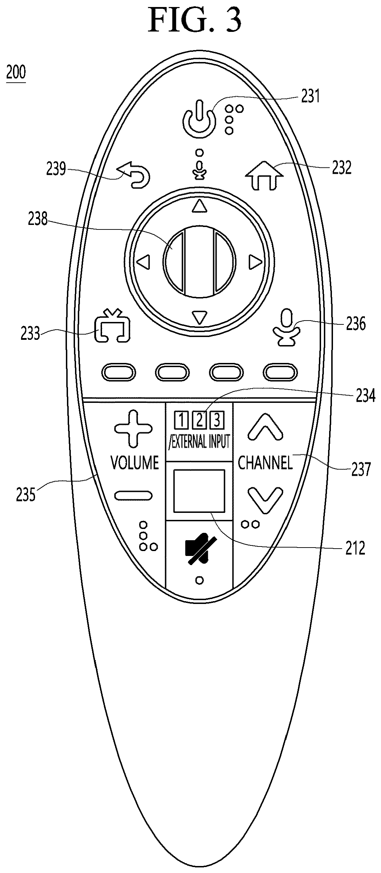

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a controller 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output unit 250 may output image or voice signals in response to the operation of the user input unit 230, or may output image or voice signals corresponding to signals transmitted from the display device 100.

A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced.

The power supply unit 260 may resume the supply of power if a predetermined key provided at the remote control device 200 is operated.

The storage unit 270 may store various kinds of programs and application data required to control or operate the remote control device 200.

If the remote control device 200 transmits/receives signals wirelessly through the display device 100 and the RF module 221, the remote control device 200 and the display device 100 transmits/receives signals through a predetermined frequency band.

The controller 280 of the remote control device 200 may store, in the storage unit 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

The sound acquisition unit 290 may be provided in plurality.

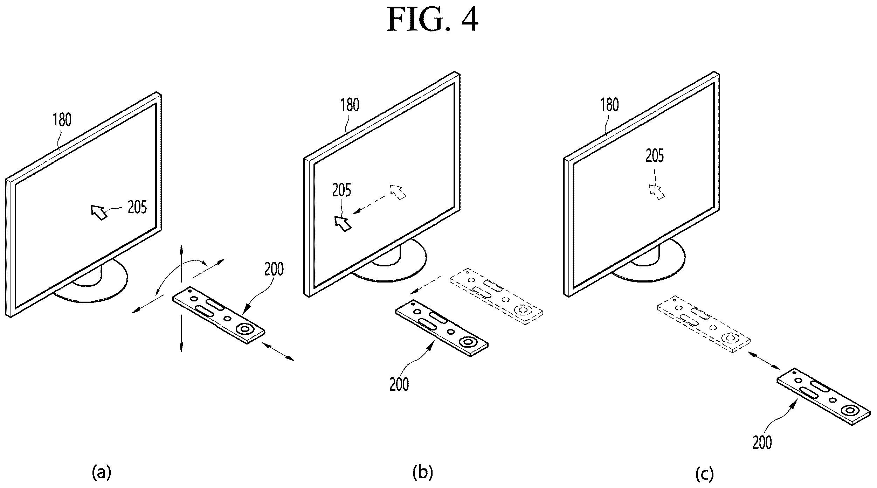

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display 180 of the display device 100 is moved to the left according to the movement of the remote control device 200.

Information on a movement of the remote control device 200 sensed through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display 180. Thus, a selected area in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. That is, if the remote control device 200 is moved away from or closer to the display 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

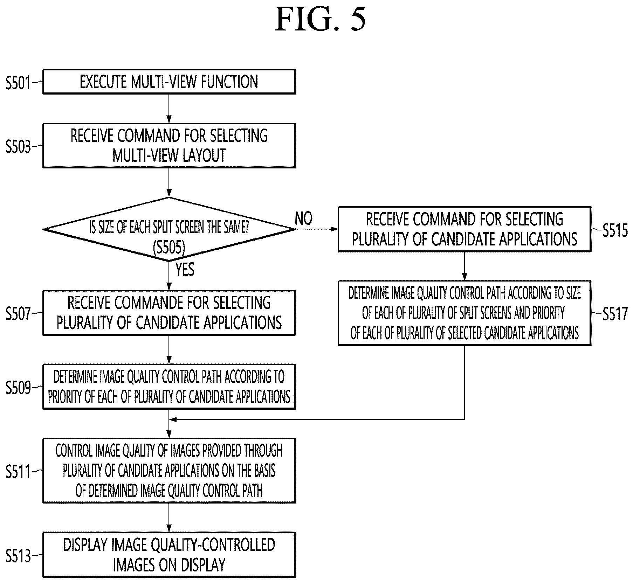

Fig. 5 is a view for explaining a method for controlling an image quality of a display device according to an embodiment of the present disclosure.

Referring to Fig. 5, a controller 170 of a display device 100 executes a multi-view function (S501).

In an embodiment, the multi-view function may be a function of splitting an entire screen of a display 180 into a plurality of split screens so that an image is viewed through each split screen.

The controller 170 may execute the multi-view function when receiving a command for selecting an icon displayed on the display 180 or a command generated by selecting a preset button provided on a remote control device 200.

The controller 170 receives a multi-view layout command on a multi-view setting screen displayed according to the execution of the multi-view function (S503).

When the multi-view function is executed, the multi-view setting screen may be displayed on the display 180.

The multi-view setting screen may be a screen for setting the number of split screens, a size of each split screen, and an input source matching each split screen.

The input source may be any of an application installed on the display device 100 and an external input interface such as HDMI. The application may be named an app.

The multi-view layout command may be a command that sets the number of split screens and the size of each split screen.

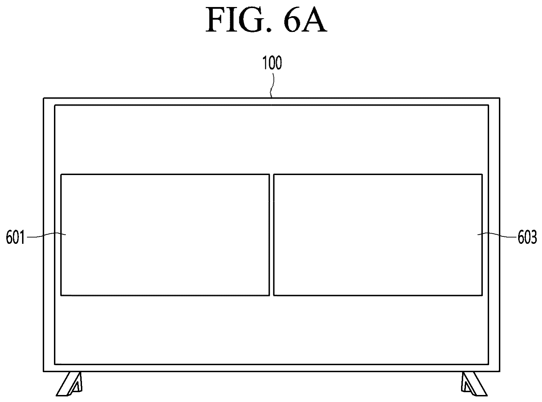

Figs. 6a to 6f are views illustrating various types of multi-views according to an embodiment of the present disclosure.

Referring to Figs. 6a to 6f, various types of multi-views that may be set according to a user input on the multi-view setting screen are illustrated.

Figs. 6a illustrates a multi-view that divides the entire screen of the display device 100 into two split screens 601 and 603 having the same size.

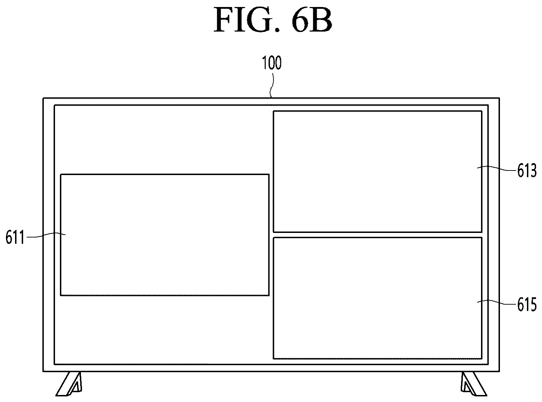

Fig. 6b illustrates that the entire screen of the display device 100 is divided into three split screens having the same size. The three split screens may include a left center split screen 611, an upper right split screen 613, and a lower right split screen 615.

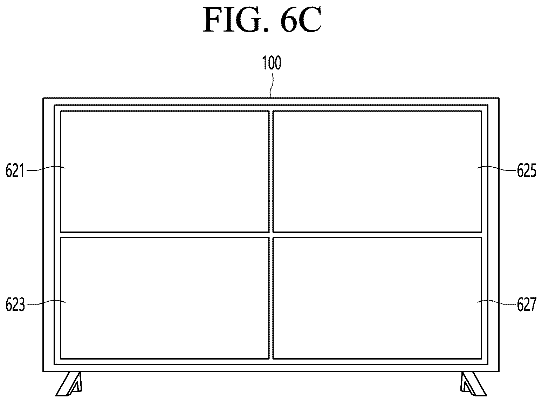

Fig. 6c illustrates a multi-view that divides the entire screen of the display device 100 into four split screens 621, 623, 625, and 627 having the same size.

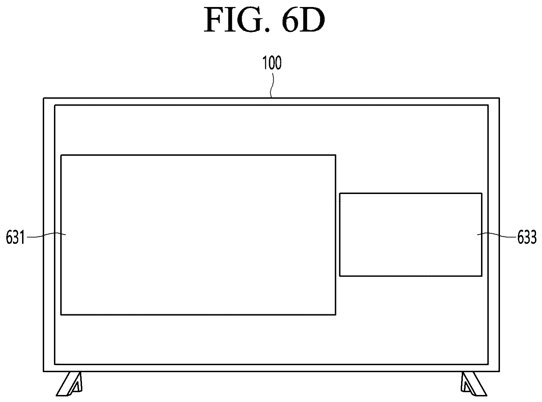

Fig. 6d illustrates a multi-view that divides the entire screen of the display device 100 into two split screens 631 and 633 having different sizes.

A size of the left split screen 631 may be larger than a size of the right split screen 633.

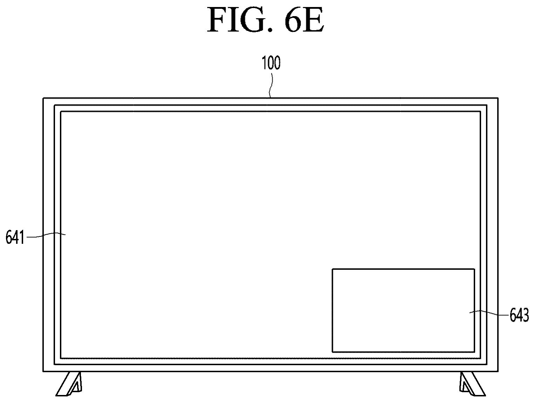

Fig. 6e illustrates a multi-view that is provided as the entire screen 641 of the display device 100 and a PIP screen 643 in the form of a PIP disposed within the entire screen 641.

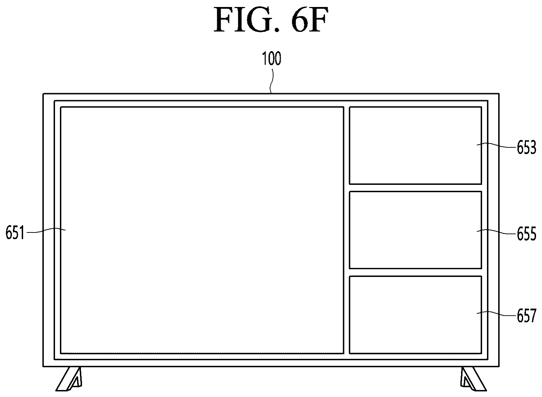

Fig. 6f illustrates a multi-view that divides the entire screen of the display device 100 into three split screens 653, 655, and 657 having the same size and a split screen 651 larger than the size of each of the three split screens 653, 655, and 657.

As shown above, the number and sizes of split screens may be set on the multi-view setting screen.

Fig. 5 is explained again.

The controller 170 determines whether the sizes of the split screens are the same on the basis of the received multi-view layout command (S505).

The controller 170 may determine whether the sizes of the split screens are the same by using information about the size of each split screen set on the multi-view setting screen.

After determining that the sizes of the split screens are the same, the controller 170 receives a command for selecting a plurality of candidate applications that respectively represent the input sources of the split screens (S507).

Each of the plurality of candidate applications may be an application that outputs an input image to each split screen.

Each of the plurality of candidate applications may be any one of a live TV application that provides a real-time broadcast program image, a streaming application that provides a real-time streaming image, an HDMI application that provides an external input image via HDMI, a browser application that provides a website image via an Internet browser, and a camera application that provides an image captured via a camera.

The controller 170 may receive a command for selecting an application matching each split screen on the multi-view setting screen.

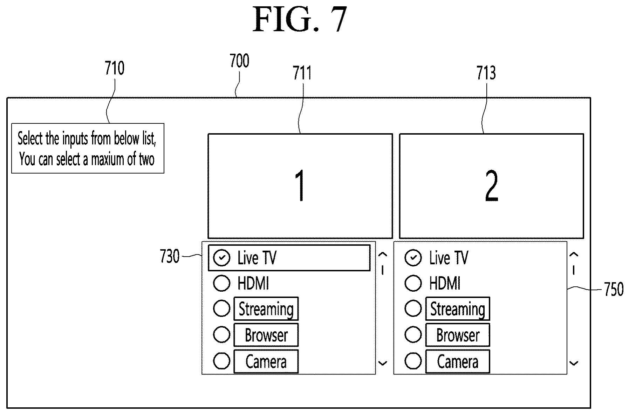

This will be described with reference to Fig. 7.

Fig. 7 is a view for explaining an example of a multi-view setting screen according to an embodiment of the present disclosure.

Referring to Fig. 7, a multi-view setting screen 700 displayed on a display 180 by the display device 100 is illustrated.

In the multi-view setting screen 700, it is assumed that two split screens having the same size are selected.

The multi-view setting screen 700 may include a guide text 710 guiding the selection of two input sources, a first split screen item 711, a first input list 730, a second split screen item 713, and a second input list 750.

The first split screen item 711 may be an item that displays a preview image to be displayed on the first split screen.

The first input list 730 may be a list for selecting an input source of the first split screen item 711.

The second split screen item 713 may be an item that displays a preview image to be displayed on the second split screen.

The second input list 750 may be a list for selecting an input source of the second split screen item 713.

Each of the first input list 730 and the second input list 750 may include a plurality of candidate application items corresponding to the plurality of candidate applications representing the input sources.

The user may select a candidate application to be displayed on the first split screen through the first input list 730 and may select a candidate application to be displayed on the second split screen through the second input list 750.

Fig. 5 is explained again.

The controller 170 determines the image quality control path according to a priority of each of the plurality of candidate applications selected according to the received command (S509).

The controller 170 may determine the image quality control path according to a preset priority of each selected candidate application when the sizes of the split screens are the same.

The priority of each candidate application may be determined in advance on the basis of performance of the controller 170 or an system on chip (SoC) provided in the controller 170.

A memory 140 of the display device 100 may store a reference table that matches each candidate application with a priority value of each candidate application.

The controller 170 may determine the priority of each selected candidate application using the first reference table stored in the memory 140.

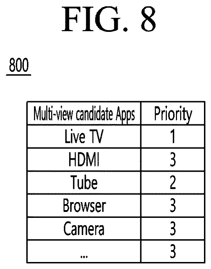

Fig. 8 is a view for explaining the first reference table according to an embodiment of the present disclosure.

Referring to Fig. 8, the first reference table 800 may include a candidate application for providing the multi-view functional and the priority value matched to the candidate application.

The candidate application may be named as an input source.

For example, the priority value of the live TV application is 1, the priority value of the HDMI application is 3, the priority value of the tube application that provides real-time streaming service is 2, the priority value of the browser application is 3, and the priority value of the camera application is 3.

A lower priority value may indicate a higher priority.

When the priority value is 1, the image quality control path of the candidate application may be determined as a main image quality control path.

When the priority value is 2, the image quality control path of the candidate application may be determined as a sub image quality control path.

When the priority value is 3, the image quality control path of the candidate application may be determined as a graphic path or a path in which all quality control blocks are turned off.

The image quality control path may be set as the main image quality control path to provide a better image quality to the candidate applications having a higher priority.

Fig. 5 is explained again.

The image quality control path may be any one of the main image quality control path, the sub image quality control path, and the graphic path.

The main image quality control path may be a path for performing a control of a plurality of image quality elements.

The main image quality control path may be a path that passes through a plurality of image quality control blocks respectively corresponding to the plurality of image quality elements.

The sub image quality control path may be a path for controlling some of the image quality elements of the plurality of image quality elements.

The sub image quality control path may be a path that passes some image quality control blocks respectively corresponding to some image quality elements of the plurality of quality elements.

The graphic path may be a path for creating a user interface.

The controller 170 may determine the image quality control path of the candidate application having the highest priority among the selected candidate applications as the main image quality control path.

The controller 170 may determine the image quality control path in an order of the main image quality control path, the sub image quality control path, and the graphic path according to the priorities of the candidate applications.

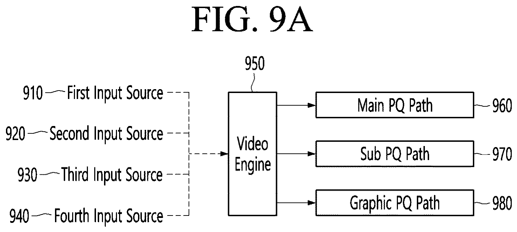

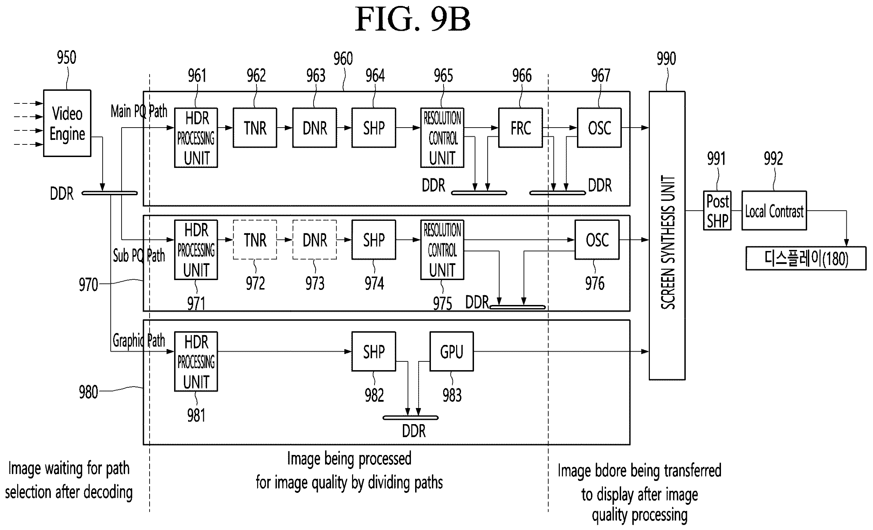

Figs. 9a and 9b are views for explaining the image quality control path according to an embodiment of the present disclosure.

Referring to Fig. 9a, a video engine 950 may output a video received from each of the first to fourth input sources 910 to 940 to any one of the main image quality control path 960, the sub image quality control path 970, and the graphic path 980.

The video engine 950 may be included in the controller 170 of Fig. 1.

The video engine 950 and the main image quality control path 960, the sub image quality control path 970, and the graphic path 980 may be included in the controller 170 of Fig. 1.

In an embodiment, the video engine 950 may determine the image quality control path for each candidate application on the basis of the priorities of the selected candidate applications.

In another embodiment, the video engine 950 may determine the image quality control path for each candidate application on the basis of the priority of each of the selected candidate applications and the size of the split screen matched to each candidate application.

The video engine 950 may decode an image received from the input source and output the decoded image to one of the plurality of image quality control paths.

Each of the plurality of input sources 910 to 940 may correspond to each of the plurality of candidate applications.

Each input source may represent the candidate application, or may represent a source related to the candidate application.

When the candidate application is the live TV application, the input source may be a tuner 131.

When the candidate application is the HDMI application, the input source may be an external device connected to the HDMI terminal of the external device interface 135.

When the candidate application is the application that provides the real-time streaming service, the input source may be an external server connected through a network interface 133.

When the candidate application is the application that provides the Internet web browser, the input source may be an Internet server connected through the network interface 133.

When the candidate application is the application that provides the camera service, the input source may be a camera connected through the external device interface 135.

Fig. 9b is a view for specifically explaining each of the main image quality control path 960, the sub image quality control path 970, and the graphic path 980.

Referring to Fig. 9b, the video engine 950 may store an image input through each input source in a buffer DDR and output the stored image to one of the image quality control paths.

The buffer DDR may be included in the memory 140 or may be a separate component.

The buffer DDR may be provided in one or more.

The main image quality control path 960 may include an HDR processing unit 961, a noise removal unit (TDR) 962, a decontour edge improvement unit (DNR) 963, a sharpness control unit (SHP) 964, a resolution control unit 965, a frame rate control unit 966, and an output scaler (OSC) 967.

The HDR processing unit 961 may perform high dynamic range (HDR) processing on an image.

The noise removal unit (TDR) 962 may remove temporal noise from the HDR-processed image.

The decontour edge improvement unit (DNR) 963 may improve a boundary of an image from which noise is removed.

The sharpness control unit (SHP) 964 may adjust sharpness of the image having improved edges.

The resolution control unit 965 may control resolution of the image of which the sharpness adjusted. The resolution control unit 965 may perform a super resolution operation of converting a low resolution image into a high resolution image.

The frame rate control unit 966 may adjust a frame rate of the image having the adjusted resolution.

The output scaler (OSC) 967 may upscale the image having the adjusted frame rate. The upscaled image may be output to a screen synthesis unit 990.

As described above, the main image quality control path 960 may perform a control on a plurality of image quality elements through image quality control blocks, respectively.

The sub image quality control path 970 may include an HDR processing unit 971, a sharpness control unit 974, a resolution control unit 975, and an output scaler 976.

The HDR processing unit 971 may perform high dynamic range (HDR) processing on an image.

The sharpness control unit 974 may adjust sharpness of the HDR processed image.

The resolution control unit 975 may convert a low resolution image having the adjusted sharpness into a high resolution image.

The output scaler 976 may upscale the image of which the resolution is converted.

In an embodiment, the sub image quality control path 970 may not include some image quality control blocks compared to the main image quality control path 960.

For example, the sub image quality control path 970 may not include a noise removal unit 972, an edge improvement unit 973, or a frame rate control unit.

In another embodiment, the sub image quality control path 970 may include a noise removal unit 972 and an edge improvement unit 973, but the noise removal unit 972 and the edge improvement unit 973 may be bypassed. That is, the image input to the sub image quality control path 970 may be output to the output scaler 976 through the HDR processing, the sharpness adjustment, and the resolution adjustment.

As described above, some image quality elements may not be controlled in the sub image quality control path 970 compared to the main image quality control path 960.

That is, when providing the multi-view function, the image quality control of the input source image may be selectively performed according to the types of input sources.

Thus, the selective image quality control may be performed on the images, in which the control of all the image quality elements is unnecessary, to prevent the power consumption.

The graphic path 980 may include an HDR processing unit 981, a sharpness control unit 982, and a GPU 983.

The graphic path 980 may be a path for processing an image quality of a user interface image.

The video engine 950 may determine the image quality control path of the UI image as a graphic path when the UI image is input through the input source.

The HDR processing unit 981 may perform HDR processing on the UI image.

The sharpness control unit 982 may adjust sharpness of the HDR processed UI image.

The GPU 983 may perform graphic processing of the UI image having the adjusted sharpness through the graphic processing unit.

The screen synthesis unit 990 may synthesize an image passing through the main image quality control path 960, an image passing through the sub image quality control path 970, and a UI image that passing through the graphic path 980.

A post sharpness control unit 991 may adjust sharpness of the synthesized image.

A local contrast control unit 992 may locally control a contrast of the synthesized image having the adjusted sharpness, and the synthesized image having the adjusted contrast may be output to the display 180.

The display 180 may display images passing through the main image quality control path and the sub image quality control path on the respective split screens.

Fig. 5 is explained again.

The controller 170 controls image qualities of images provided through the plurality of candidate applications on the basis of the determined image quality control path (S511).

The controller 170 may control the image quality of each image according to the image quality control path corresponding to each image. This is as described in Figs. 9a and 9b.

The controller 170 displays the images, of which the image qualities are controlled, on split screens of the display 180, respectively (S513).

The controller 170 determines that the sizes of the split screens are not the same and then receives a command for selecting the plurality of candidate applications representing the input sources of the split screens (S515).

The controller 170 may receive a command for selecting an application matching each of the split screens having different sizes on the multi-view setting screen.

Assuming that sizes of the first split screen item 711 and the second split screen item 713 in Fig. 7 are different, the remaining descriptions may be applied to the embodiment of Fig. 7.

The controller 170 determines the image quality control path according to the size of each of the plurality of split screens and the priority of each of the plurality of selected candidate applications (S517) to performs operations S511 and S513.

In an embodiment, when a size of the first split screen on which the first image of the first candidate application is displayed is larger than a size of the second split screen on which the second image of the second candidate application is displayed, the controller 170 may determine a path of the first image as the main image quality control path and determine a path of the second image as the sub image quality control path, regardless of the priorities of the first and second candidate applications.

That is, the controller 170 may determine the image quality control path by giving a priority to the size of the split screen over the priority of each candidate application.

This is because the user will be more interested in image having a larger screen size.

The controller 170 may determine the image quality control path in consideration of only the priority of each candidate application when there is an application that does not affect the screen size among the plurality of selected candidate applications.

For example, it is assumed that a priority value of the first candidate application, in which the screen size is not a consideration, is 2, a priority value of the second candidate application, in which the screen size is a consideration, is 1, and a size of the first split screen on which the first candidate application is displayed is larger than a size of the second split screen on which the second candidate application is displayed.

Since the controller 170 does not consider the screen size for the first candidate application, it may only consider the priorities of the first and second candidate applications even if the size of the first split screen on which the first candidate application is displayed is larger than the size of the second split screen on which the second candidate application is displayed.

In this case, since the priority of the first candidate application is lower than that of the second candidate application, the controller 170 may determine the path of the second image of the second candidate application as the main image quality control path and may determine the path of the first image of the first candidate application as the sub image quality control path.

The controller 170 may determine the image quality control path of each candidate application by using a second reference table that matches the candidate applications, the correlation of the screen size of the candidate applications, and the priority values of the candidate applications.

The second reference table may be stored in the memory 140 of the display device 100.

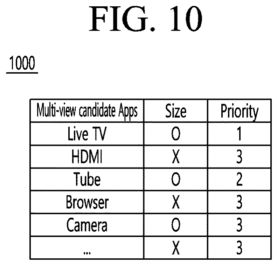

Fig. 10 is a view for explaining a second reference table according to an embodiment of the present disclosure.

Referring to FIG. 10, a second reference table 1000 may include candidate applications for providing the multi-view function, whether or not the screen size of each candidate application is correlated, and a priority value matched with each candidate application.

The live TV application has a correlation in screen size and a priority value of 1.

The HDMI application has no correlation in screen size and has a priority value of 3.

The Tube application, which provides real-time streaming services, has a correlation in screen size and a priority value of 2.

The browser application has no correlation in screen size and has a priority value of 3.

The camera application has a correlation in screen size and a priority value of 3.

A lower priority value may indicate a higher priority.

For example, it is assumed that the browser application and the Tube application are selected, and that the size of the first split screen matched with the browser application is larger than the size of the second split screen matched with the camera application.

The controller 170 may consider only the priority of each of the browser application and the Tube application through the second reference table 1000 because there is no correlation in screen size between the browser application and the Tube application.

Since the priority value of the browser application is greater than the priority value of the Tube application, the controller 170 may determine the path of the image of the Tube application as the main image quality control path and determine the path of the image of the browser application as the sub image quality control path.

As described above, according to an embodiment of the present disclosure, when providing the multi-view function by simultaneously considering the correlation of the screen size and the priority of each candidate application, the image having the optical image may be output through each of the split screens.

Thus, power consumption of the SoC may be reduced, and a multi-view viewing image quality of the user may be significantly improved.

After the image quality control path of the input source image input to each split screen is determined, the user has a need to change a position of the input source image.

Hereinafter, various methods for changing the position of the input source image (or input image) on the split screen will be described.

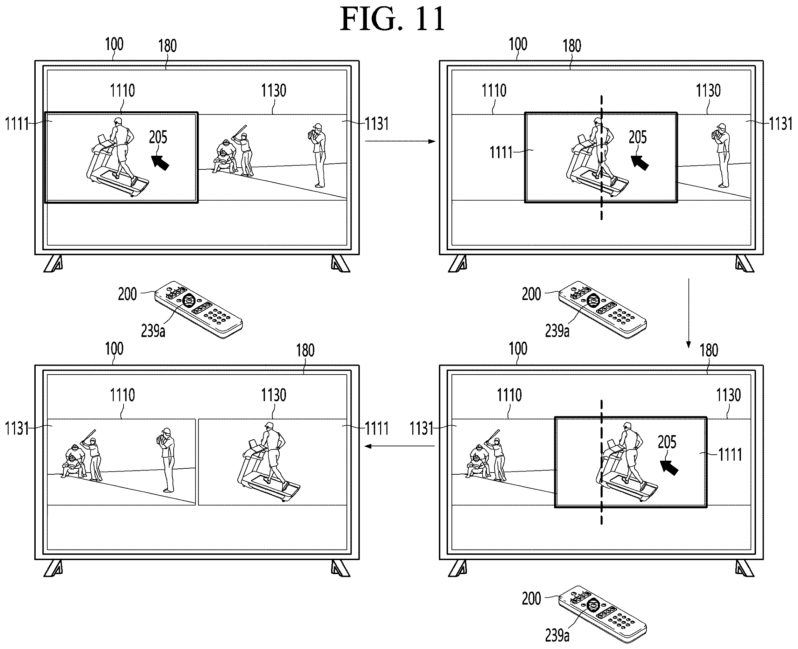

Figs. 11 to 14 are views for explaining various examples of changing a position of the input image displayed on the split screen when the multi-view function operates.

First, Fig. 11 will be described.

Referring to Fig. 11, the display device 100 may display a first input image 1111 and a second input image 1131 on two split screens 1110 and 1130 having the same screen size.

The display device 100 may receive a command for selecting the first input image 1111 displayed on the first split screen 1110 by a pointer (or cursor) 205 from a remote control device 200.

That is, the user may select the first input image 1111 by pressing a wheel button 239a provided on the remote control device 200.

The display device 100 may receive a command for moving the pointer 205 onto the second split screen 1130 from the remote control device 200. Thus, the first input image 1111 may be moved to a right side.

That is, the user may move the remote control device 200 to the right side in the state of pressing the wheel button 239a provided on the remote control device 200.

The display device 100 may display the first input image 1111 on the second split screen 1130 and display the second input image 1131 on the first split screen 1110 when an area exceeding half of the entire area of the first input image 1111 is disposed on the second split screen 1130.

That is, the display device 100 may change positions of the first input image 1111 and the second input image 1131 when the area exceeding half of the entire area of the first input image 1111 is disposed on the second split screen 1130.

As described above, when using the multi-view function, the user may change the position of the input image through a simple operation of the remote control device 200.

The input source (or candidate application) matching the first split screen 1110 may be set as the main image quality control path, and the input source matching the second split screen 1130 may be set as the sub image quality control path.

In the display device 100, the image quality control paths of the images may not be changed as the positions of the first input image 1111 and the second input image 1131 are changed.

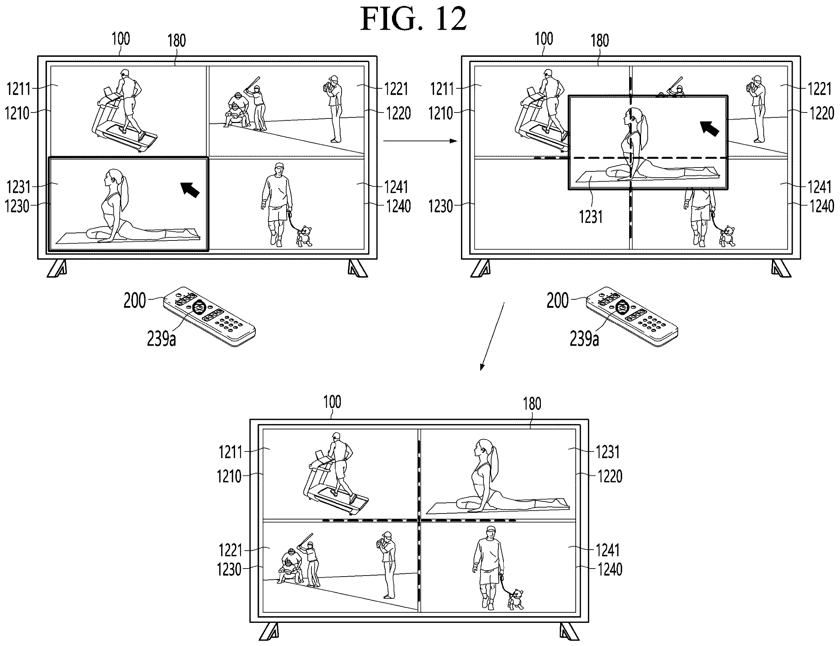

Next, Fig. 12 is described.

Referring to Fig. 12, the display device 100 may display a first input image 1211, a second input image 1221, a third input image 1231, and a fourth input image 1241 on first to fourth split screens 1210, 1220, 1230, and 1240 having the same screen size, respectively.

The display device 100 may receive a command for selecting the third input image 1231 displayed on the third split screen 1230 by using the pointer (or cursor) 205 from the remote control device 200.

That is, the user may select the third input image 1231 by pressing a wheel button 239a provided on the remote control device 200.

The display device 100 may receive a command for moving the pointer 205 onto the second split screen 1220 from the remote control device 200. Thus, the third input image 1231 may be moved to a right upper end.

That is, the user may move the remote control device 200 to the right upper end in the state of pressing the wheel button 239a provided on the remote control device 200.

The display device 100 may determine the second split screen 1220 that overlaps the largest area compared to other areas of the entire area of the third input image 1231 as a display position of the third input image 1231.

The display device 100 may display the third input image 1231 on the second split screen 1220 that overlaps the largest area of the entire area compared to other area of the entire area of the third input image 1231 and display the second input image 1221 on the third split screen 1230.

That is, the display device 100 may change the positions of the second input image 1221 and the third input image 1231.

As described above, when using the multi-view function, the user may change the position of the input image through a simple operation of the remote control device 200.

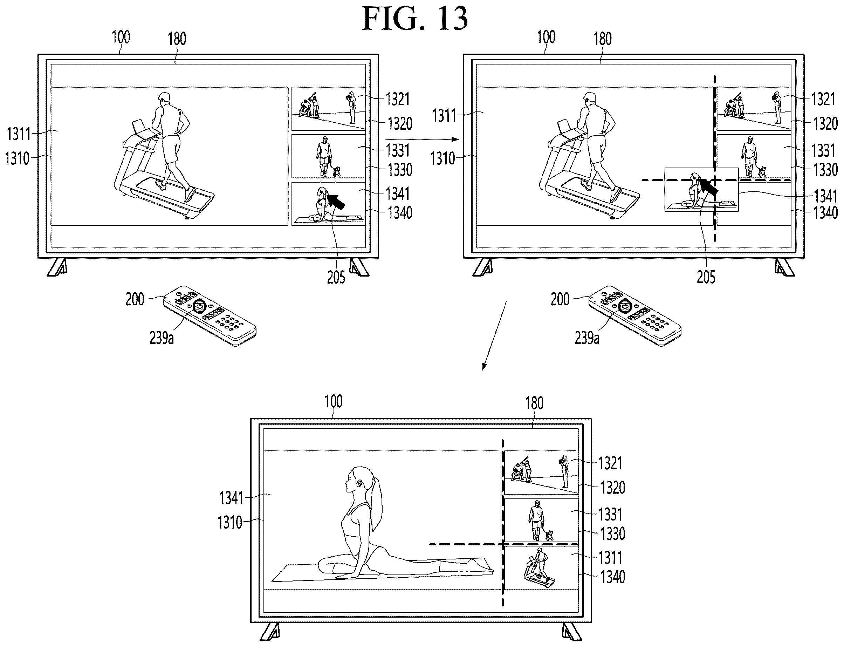

Next, Fig. 13 is described.

Referring to Fig. 13, the display device 100 may display a first input image 1311 on a first split screen 1310, a second input image 1321 on a second split screen 1320, a third input image 1331 on a third split screen 1330, and a fourth input image 1341 on a fourth split screen 1340.

Sizes of the second to fourth split screens 1320, 1330, and 1340 are the same, and the size of the first split screen 1310 among the four screens is the largest.

That is, the user may select the fourth input image 1341 by pressing a wheel button 239a provided on the remote control device 200.

The display device 100 may receive a command for moving the pointer 205 onto the first split screen 1310 from the remote control device 200. Thus, the fourth input image 1341 may be moved to a left side.

The display device 100 may determine the first split screen 1310 that overlaps the largest area compared to other areas of the entire area of the fourth input image 1341 as a display position of the fourth input image 1341.

The display device 100 may display the fourth input image 1341 on the first split screen 1310 that overlaps the largest area compared to other areas of the entire area of the fourth input image 1341 and display the first input image 1311 on the fourth split screen 1340.

That is, the display device 100 may change the positions of the first input image 1311 and the fourth input image 1341.

As described above, when using the multi-view function, the user may change the position of the input image through a simple operation of the remote control device 200.

The input source (or candidate application) matching the first split screen 1310 may be set as the main image quality control path, and the input source matching the fourth split screen 1340 may be set as the sub image quality control path.

When it is assumed that the candidate applications corresponding to the first input image 1311 and the fourth input image 1341 have a correlation in screen size, this is also a result of giving a high priority to the candidate application having a large split screen according to an embodiment of Fig. 5.

The display device 100 may change the image quality control path of each image as the positions of the first input image 1311 and the fourth input image 1341 are changed.

Since the size of the first split screen 1310 is larger than the size of the fourth split screen 1340, the display device 100 may determine a path of the fourth input image 1341 input to the first split screen 1310 as the main image quality control path, and determine a path of the first input image 1311 input to the fourth split screen 1340 as the sub image quality control path.

As described above, according to an embodiment of the present disclosure, when providing the multi-view function, the image quality control path of the input image may be automatically changed as the position of the input image is changed. Thus, the user may watch a desired input image in optimal image quality without the need for separate image quality control setting.

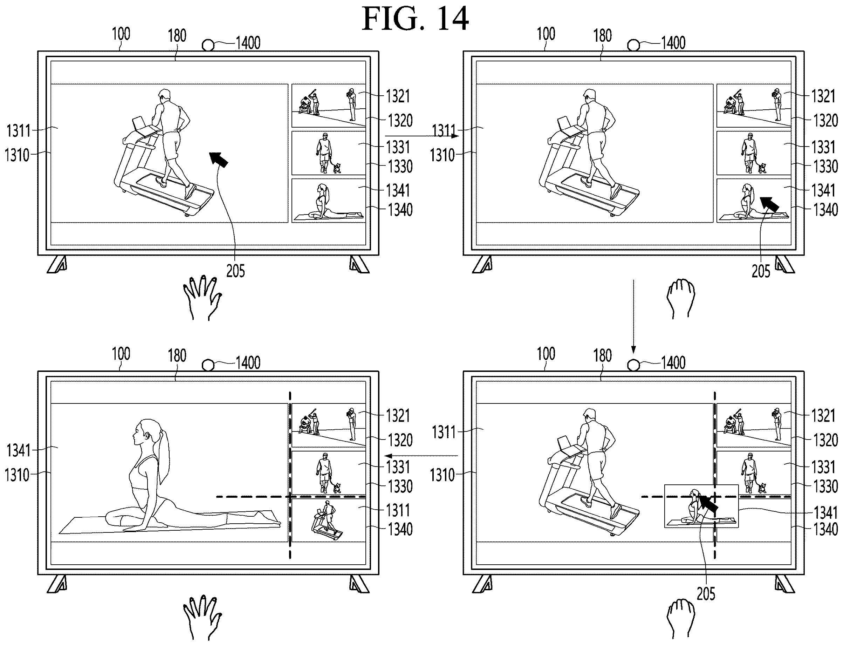

Next, Fig. 14 is described.

Fig. 14 is a view for explaining an example of changing a position of an input image on the basis of a user's gesture when providing the multi-view function.

The display device 100 may be provided with a camera 1400 and may recognize a user's hand gesture on the basis of an image captured through the camera 1400.

Referring to Fig. 14, the display device 100 may display a first input image 1311 on a first split screen 1310, a second input image 1321 on a second split screen 1320, a third input image 1331 on a third split screen 1330, and a fourth input image 1341 on a fourth split screen 1340.

Sizes of the second to fourth split screens 1320, 1330, and 1340 are the same, and the size of the first split screen 1310 among the four screens is the largest.

When the display device 100 recognizes an image of a user's palm with an open hand, it may display a pointer 205 on the display 180.

The display device 100 may recognize movement of the palm image and move the pointer 205 according to a movement direction of the palm image.

Thereafter, when the display device 100 recognizes a fist image, it may select the fourth input image 1341 on which the pointer 205 is disposed.

The display device 100 may move the selected fourth input image 1341 by recognizing the movement of the fist image.

The display device 100 may determine the first split screen 1310 that overlaps the largest area compared to other areas of the entire area of the fourth input image 1341 as a display position of the fourth input image 1341.

When the display device 100 recognizes the palm image, it may display the fourth input image 1341 on the first split screen 1310 and display the first input image 1311 on the fourth split screen 1340.

That is, the display device 100 may change the positions of the first input image 1311 and the fourth input image 1341.

As described above, when using the multi-view function, the user may change the position of the input image with just a simple gesture.

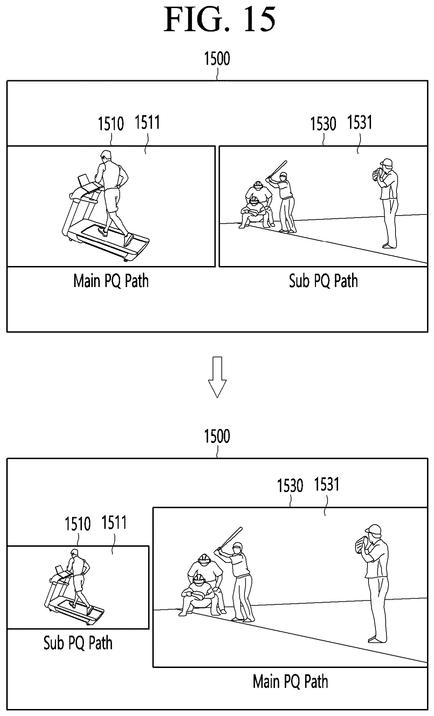

Fig. 15 is a view for explaining an example of changing the image quality control path according to a change in size of the split screen on the multi-view screen.

Referring to Fig. 15, the multi-view screen 1500 may include a first split screen 1510 and a second split screen 1530 having the same size as the first split screen 1510.

It is assumed that the image quality control path of the input source of the first split screen 1510 is set to a main PQ path, and the image quality control path of the input source of the second split screen 1530 is set to a sub PQ path.

In addition, it is assumed that the input source of the first split screen 1510 and the input source of the second split screen 1530 have a correlation in screen size.

A first input image 1511 is displayed on the first split screen 1510, and a second input image 1531 is displayed on the second split screen 1530.

The display device 100 may receive an enlargement command for enlarging the size of the second split screen 1530 from the remote control device 200.

The display device 100 may reduce the size of the first split screen 1510 and enlarge the size of the second split screen 1530 according to the enlargement command.

Since the size of the second split screen 1530 is larger than that of the first split screen 1510, the display device 100 may change the image quality control path of the first split screen 1510 from the main PQ path to the sub PQ path, and may change the image quality control path of the second split screen 1530 from the sub PQ path to the main PQ path.

Since the screen size of the first split screen 1510 is reduced, even if the image quality control path of the first split screen 1510 is changed from the main PQ path to the sub PQ path, a difference in image quality recognized by the user may not be significant.

It is assumed that the main PQ path is set in each of the first split screen 1510 and the second split screen 1530, and the size of the second split screen 1530 is enlarged.

The display device 100 may turn off or bypass some of image quality control blocks included in the main PQ path of the first split screen 1510 at a level that is not noticeable to the user.

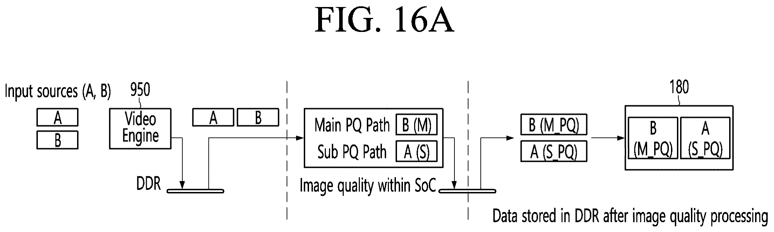

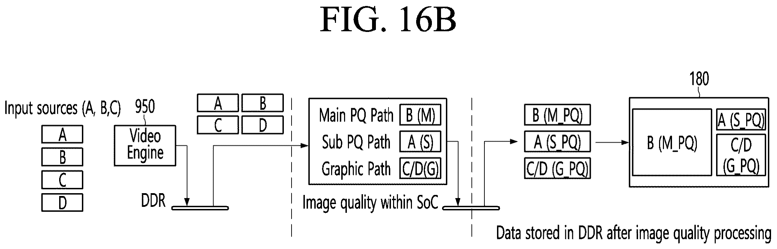

Figs. 16a and 16b are views illustrating a process of outputting an input source on a screen of a display via the image quality control path when providing the multi-view function.

Fig. 16a is an example of two split screens having the same size, and Fig. 16b is an example of three split screens having different sizes.

Referring to FIG. 16a, the video engine 950 receives two input sources A and B to temporarily store the received input sources A and B in a buffer DDR.

The video engine 950 may determine the input source B as a main PQ control path and the input source A as a sub PQ control path.

Image quality processing of the input source B may be performed through the main PQ control path, and image quality processing of the input source A may be performed through the sub PQ control path.

Each image data after the image quality processing may be stored in the buffer DDR. That is, the buffer DDR may store a first output image B(M_PQ) of which a quality is processed along the main PQ control path and a second output image A(S_PQ) of which a quality is processed along the sub PQ control path.

Each of the first output image B(M_PQ) and the second output image A(S_PQ) may be displayed on the display 180.

Next, Fig. 16b is described.

Referring to Fig. 16b, the video engine 950 receives four input sources A, B, C, and D to temporarily store the received input sources A, B, C, and D in a buffer DDR.

The video engine 950 may determine the input source B as the main PQ control path, the input source A as the sub PQ control path, and the input sources C and D as a graphic path.

Image quality processing of the input source B may be performed through the main PQ control path, image quality processing of the input source A may be performed through the sub PQ control path, and image quality processing of the input sources C and D may be performed through the graphic path.

Each image data after the image quality processing may be stored in the buffer DDR. That is, the buffer DDR may store a first output image B(M_PQ) of which a quality is processed along the main PQ control path, a second output image A(S_PQ) of which a quality is processed along the sub PQ control path, and a third output image C/D(G_PQ) of which a quality is processed along the graphic path.

The first output image B(M_PQ), the second output image A(S_PQ), and the third output image C/D(G_PQ) may be displayed on the display 180 as split screens, respectively.

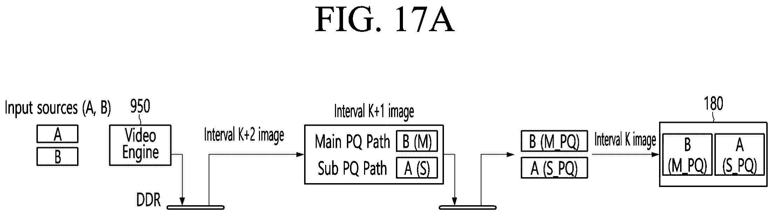

Figs. 17a to 17d are views for explaining the image control path through which the input source passes according to a change in position of the input source when providing the multi-view function.

Figs. 17a to 17d may correspond to the embodiment of Fig. 15.

Hereinafter, the input source may be stored in the buffer DDR for a line or frame unit. An interval may indicate a time point at which consecutive frames are distinguished.

It is assumed that a time point at which the user selects the split screen for adjusting the size of the split screen is an interval K, and a time point at which a desired size is set is an interval K+L.

In addition, it is assumed that the multi-view screen includes two split screens having the same size, and that the input source B is set to pass through the main PQ control path, and the input source A is set to pass through the sub PQ control path.

In addition, it is assumed that the user performs an operation for enlarging the size of the split screen on which the input source A is output.

Referring to Fig. 17a, the output images B(M_PQ) and A(S_PQ) at the interval K are displayed on the display 180.

At an interval K+1, the user's screen size setting is in progress, and the input sources are being processed for the image quality according to the main PQ control path and sub QP control path.

An interval K+2 is a time point before the image quality processing of the input sources A and B is performed.

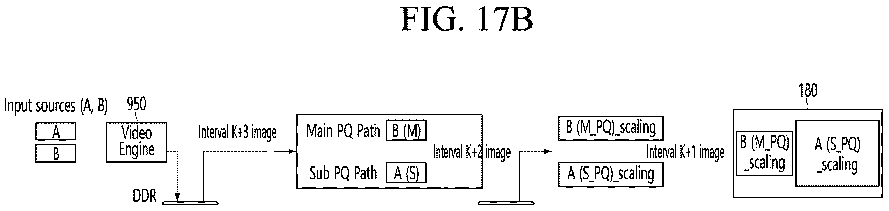

Next, Fig. 17b is described.

Since an input for screen size adjustment is received at the interval K, output images B(M_PQ)_scaling and A(S_PQ)_scaling, which are processed in image quality and adjusted in size, may be displayed on the display 180 at the interval K+1.

In addition, the size of the second split screen on which the output image AS_PQ_scaling is displayed may be enlarged, and the size of the first split screen on which the output image BM_PQ_scaling is displayed may be reduced.

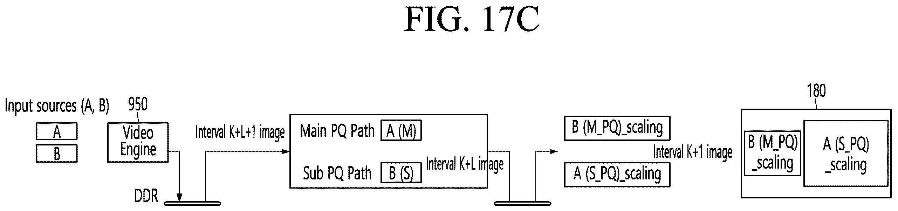

Next Fig. 17c is described.

Until the screen size setting is completed, only the image quality processing is performed on the input source, and the output images B(M_PQ)_scaling and A(S_PQ)_scaling at the interval K+1 may be displayed on the display 180.

As another example, a black image may be displayed on the display 180 until the screen size setting is completed.

At an interval K+L, the image quality control paths may be switched depending on the screen size.

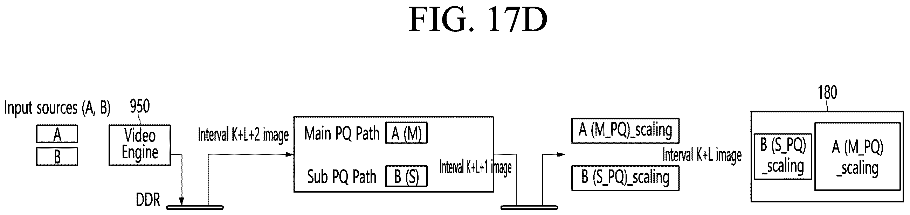

Next Fig. 17d is described.

The adjustment of the screen size is completed at the interval K+L.

At the interval K+L, the output image B(A_PQ)_scaling may be displayed on the first split screen that is reduced through the sub PQ control path, and the output image A(M _PQ)_scaling may be displayed on the second split screen that is enlarged through the main PQ control path.

As described above, according to an embodiment of the present disclosure, when adjusting the size of the screen in the multi-view screen, a delay that occurs as the image quality control path is switched may not be revealed to the user.

This may allow the user to provide a seamless experience.

According to the embodiments of the present disclosure, the above-described method may also be embodied as processor readable codes on a processor readable recording medium. Examples of the processor readable medium include read-only memory (ROM), random-access memory (RAM), CD-ROMs, magnetic tapes, floppy disks, and optical data storage devices.

The display device described above is not limited to the configuration and method of the embodiments described above, and the embodiments may be configured by selectively combining all or portion of the embodiments so that various modifications may be made.

## Claims

1. A display device comprising:
a display configured to display a multi-view screen comprising a plurality of split screens; and
a controller configured to:
determine an image quality control path of each of input sources on the basis of a priority of the plurality of input sources that respectively correspond to the plurality of split screens;
process an image quality of each of a plurality of input images that are respectively provided through the input sources according to the determined image quality control path; and
display the plurality of input images, of which the qualities are processed, on the plurality of split screens, respectively.

2. The display device according to claim 1, wherein the image quality control path comprises:
a main image quality path in which the image quality processing is performed through a plurality of image quality control blocks, which are configured to control a plurality of image quality elements, respectively; and
a sub image quality control path in which the image quality processing is performed through some image quality control blocks, which are configured to control some image quality elements of the plurality of image quality elements.

3. The display device according to claim 2, wherein the plurality of split screens comprise a first split screen and a second split screen, and
the plurality of input sources comprise a first input source and a second input source,
wherein the controller is configured to, when the priority of the first input source corresponding to the first split screen is higher than the priority of the second input source corresponding to the second split screen,:
determine the image quality control path of the first input source as the main image quality control path; and
determine the image quality control path of the second input source as the sub image quality control path.

4. The display device according to claim 3, further comprising a memory in which a first reference table obtained by matching the plurality of input sources and priority values respectively corresponding to the plurality of input sources is stored,
wherein the controller is configured to determine the priorities of the first and second input sources using the first reference table.

5. The display device according to claim 3, wherein the controller is configured to:
receive a command for enlarging the second split screen;
change the image quality control path of the first input source from the main image quality control path to the sub image quality control path when a size of the second split screen is greater than a size of the first split screen; and
change the image quality control path of the second input source from the sub image quality control path to the main image quality control path.

6. The display device according to claim 3, wherein the controller is configured to:
receive a command for changing a position between a first input image displayed on the first split screen and a second input image displayed on the second split screen; and
display the first input image on the second split screen and display the second input image on the first split screen according to the received command.

7. The display device according to claim 1, wherein the controller is configured to determine the image quality control path of each of the input sources on the basis of the priority of each of the plurality of input sources when sizes of the plurality of split screens are the same.

8. The display device according to claim 2, wherein the controller is configured to determine the image quality control path of each of the input sources on the basis of a size of each of the plurality of split screens and the priority of each of the plurality of input sources when the sizes of the plurality of split screens are different from each other.

9. The display device according to claim 8, wherein the plurality of split screens comprise a first split screen and a second split screen having a size less than a size of the first split screen, and
the plurality of input sources comprise a first input source and a second input source,
wherein, when the priority of the first input source is lower than the priority of the second input source, the controller is configured to:
determine the image quality control path of the first input source as the main image quality control path; and
determine the image quality control path of the second input source as the sub image quality control path.

10. The display device according to claim 8, further comprising a memory in which a second reference table obtained by matching matches the plurality of input sources, a correlation between screen sizes of the input sources, and priority values respectively corresponding to the plurality of input sources is stored,
wherein the controller is configured to determine the image quality control path of each of the input sources using the second reference table.

11. The display device according to claim 1, wherein the multi-view screen comprises an input list for setting the input source of each split screen.

12. The display device according to claim 11, wherein the controller is configured to set the size of each split screen according to the command received through the multi-view screen.

13. The display device according to claim 1, wherein each of the input sources represents an application installed on the display device.

14. The display device according to claim 2, wherein the image quality control path further comprises a graphic path for image quality processing of an user interface image.

15. A method for controlling an image quality of a display device, the method comprising:
displaying a multi-view screen comprising a plurality of split screens;
determining an image quality control path of each of a plurality of input sources on the basis of a priority of each of the plurality of input sources respectively corresponding to the plurality of split screens;
processing an image quality of each of a plurality of input images respectively provided through the plurality of input sources according to the determined image quality control path; and
displaying the plurality of input images, of which the qualities are processed, on the plurality of split screen, respectively.
